# EUROPÄISCHE PATENTSCHRIFT

(11) **EP 2 525 195 B1**
(45) Veröffentlichungstag und Bekanntmachung des Hinweises auf die Patenterteilung: **20.01.2016**
(21) Anmeldenummer: 12166338.9
(22) Anmeldetag: 02.05.2012
(51) Int. Cl.: G01D 5/36, G01D 5/38

(54) **Optische Positionsmesseinrichtung**
Optical positioning device
Dispositif optique de mesure de la position

(30) Priorität: 18.05.2011 DE 102011076055
(43) Veröffentlichungstag der Anmeldung: 21.11.2012
(73) Patentinhaber: Dr. Johannes Heidenhain GmbH, 83301 Traunreut (DE)
(72) Erfinder: Hermann,, Michael, 83342 Tacherting (DE)

(56) Entgegenhaltungen:
- DE-A1- 19 748 802
- DE-A1- 19 936 181
- DE-A1-102008 044 858
- JP-A- 2002 048 602
- US-A1- 2008 117 440

## Beschreibung

Die vorliegende Erfindung betrifft eine optische Positionsmesseinrichtung.

Aus der DE 10 2008 044 858 A1 der Anmelderin ist eine optische Positionsmesseinrichtung bekannt, die zur Erfassung der Position von zwei relativ zueinander in mindestens einer Messrichtung beweglichen Objekten geeignet ist. Hierzu umfasst die Positionsmesseinrichtung eine Maßverkörperung, die mit einem der beiden Objekte verbunden ist. Die Maßverkörperung weist eine sich in Messrichtung erstreckende Inkrementalteilung sowie mindestens eine Referenzmarkierung an einer Referenzposition auf. Über die Referenzmarkierung wird ein Bezugspunkt für die hochauflösende inkrementale Positionsmessung geschaffen, auf den nach dem Überfahren der Referenzmarkierung und der Erzeugung eines Referenzsignals die Inkrementalmessung bezogen wird. Desweiteren umfasst die Positionsmesseinrichtung eine Abtasteinheit, die mit dem anderen der beiden Objekte verbunden ist und welche eine divergent abstrahlende Lichtquelle, ein oder mehrere Gitter sowie eine Referenzsignal-Detektoranordnung aufweist. In der Druckschrift wird im Detail beschrieben, wie in einer optischen Positionsmesseinrichtung, basierend auf einem Abtastprinzip mit divergenter Beleuchtung, sogenannte gechirpte Referenzmarkierungen zur Erzeugung eines hochauflösenden Referenzsignals herangezogen werden können.

Die Referenzmarkierung ist in dieser Positionsmesseinrichtung in einer separaten Referenzspur benachbart zu einer Inkrementalspur mit der Inkrementalteilung auf der Maßverkörperung angeordnet. Die Relativlage des Referenzsignals zu den Inkrementalsignalen ist aus diesem Grund abhängig vom Verdrehwinkel zwischen Maßverkörperung und Abtasteinheit um eine Achse, die senkrecht zur Maßverkörperungsebene orientiert ist. Die Empfindlichkeit gegenüber einer derartigen Verdrehung ist hierbei umso größer je kleiner die Teilungsperiode der Inkrementalteilung und je größer der Abstand der Abtastschwerpunkte für die Inkremental- und Referenzmarkenspur senkrecht zur Messrichtung ist. Für die korrekte Weiterverarbeitung des Referenzsignals ist die definierte Lage und Breite des erzeugten Referenzsignals bezogen auf die Inkrementalsignale jedoch von großer Bedeutung.

Die Lage des Referenzsignals wird bislang zumeist durch eine aufwändige mechanische Justage der Abtasteinheit eingestellt. Die Breite des Referenzsignals kann durch die gezielte Veränderung von Komparator-Triggerschwellen erfolgen, die der jeweilige analoge Strom- oder Spannungspuls bei der Signalverarbeitung übersteigen bzw. unterschreiten muss, um die Einschaltschaltflanke bzw. die Ausschaltflanke des Referenzsignals zu erzeugen. Insbesondere bei hochauflösenden optischen Positionsmesseinrichtungen ist der Aufwand für eine derartige mechanische und elektrische Justage jedoch erheblich.

Aufgabe der vorliegenden Erfindung ist es, eine optische Positionsmesseinrichtung anzugeben, die auf einem Abtastprinzip mit divergenter Beleuchtung basiert und eine einfache Möglichkeit zur Erzeugung eines Referenzsignals mit definierter Lage und Breite bezogen auf die Inkrementalsignale bietet.

Diese Aufgabe wird erfindungsgemäß durch eine optische Positionsmesseinrichtung mit den Merkmalen des Anspruchs 1 gelöst.

Vorteilhafte Ausführungen der erfindungsgemäßen optischen Positionsmesseinrichtung ergeben sich aus den Maßnahmen in den abhängigen Ansprüchen.

Die erfindungsgemäße optische Positionsmesseinrichtung zur Erfassung der Position von zwei relativ zueinander in mindestens einer Messrichtung beweglichen Objekten umfasst zum einen eine Maßverkörperung, die mit einem der beiden Objekte verbunden ist und die eine sich in Messrichtung erstreckende Inkrementalteilung sowie mindestens eine Referenzmarkierung an einer Referenzposition aufweist. Die Referenzmarkierung umfasst zwei zu einer Referenzmarkierungs-Symmetrieachse spiegelsymmetrisch angeordnete Referenzmarkierungs-Teilfelder, die jeweils aus einer sich in Messrichtung erstreckenden Gitterstruktur mit einer örtlich veränderlichen Teilungsperiode bestehen. Ferner umfasst die erfindungsgemäße optische Positionsmesseinrichtung eine Abtasteinheit, die mit dem anderen der beiden Objekte verbunden ist und die eine divergent abstrahlende Lichtquelle, ein oder mehrere Gitter sowie eine Referenzsignal-Detektoranordnung aufweist. Die Referenzsignal-Detektoranordnung weist mindestens vier Detektor-Arrays mit jeweils mehreren Detektorelementen auf. Die Detektor-Arrays sind derart ausgebildet und angeordnet, dass aus der Abtastung der Referenzmarkierung über die Referenzsignal-Detektoranordnung ein erstes und zweites Paar von Teil-Referenzsignalen mit jeweils gegenphasigem Signalverlauf resultiert und das erste Paar von Teil-Referenzsignalen entlang der Messrichtung gegenüber dem zweiten Paar von Teil-Referenzsignalen um einen Versatzbetrag versetzt ist.

Vorzugsweise sind die Detektorelemente des ersten und zweiten Detektor-Arrays derart angeordnet, dass ausgehend von einer ersten Detektor-Symmetrieachse sich in Messrichtung die Mittenabstände zwischen benachbarten Detektorelementen in der gleichen Richtung verändern wie ausgehend von der Referenzmarkierungs-Symmetrieachse die Teilungsperioden der Gitterstrukturen in den Referenzmarkierungs-Teilfeldern. Die Detektorelemente des dritten und vierten Detektor-Arrays sind derart angeordnet, dass ausgehend von einer zweiten Detektor-Symmetrieachse sich in Messrichtung die Mittenabstände zwischen benachbarten Detektorelementen in der gleichen Richtung verändern wie ausgehend von der Referenzmarkierungs-Symmetrieachse die Teilungsperioden der Gitterstrukturen in den Referenzmarkierungs-Teilfeldern.

Hierbei kann die zweite Detektor-Symmetrieachse gegenüber der ersten Detektor-Symmetrieachse um einen Betrag versetzt angeordnet werden, welcher dem doppelten Versatzbetrag zwischen dem ersten und zweiten Paar von Teil-Referenzsignalen entspricht.

Es ist ferner möglich, Mittel zur Erzeugung eines Abgleichsignals vorzusehen, welches aus der optischen Abtastung der Referenzmarkierung auf der Maßverkörperung resultiert, wobei das Abgleichsignal zur Einstellung von ein oder mehr Triggersignalen bei der Weiterverarbeitung der Teil-Referenzsignale zu einem Referenzsignal dient.

Hierbei können etwa als Mittel zur Erzeugung des Abgleichsignals Gleichlicht-Detektorelemente zwischen den Detektorelementen der Detektor-Arrays angeordnet werden.

Es ist ferner möglich, als Mittel zur Erzeugung des Abgleichsignals ein Summationselement vorzusehen, welches zur Aufsummierung aller Teil-Referenzsignale der Detektor-Arrays dient.

Es kann vorgesehen werden, dass
- das erste und zweite Paar von Teil-Referenzsignalen an den Eingängen zweier Differenzverstärker anliegt und am Ausgang der beiden Differenzverstärker je ein pulsförmiges Signal zur Weiterverarbeitung bereitsteht,
- den beiden Differenzverstärkern ein Summenbildungselement und ein Differenzbildungselement nachgeordnet ist, über die ein Summen- und ein Differenzsignal aus den pulsförmigen Signalen resultiert,
- die Summen- und Differenzsignale an den ersten Eingängen mehrerer Komparatoren anliegen, an deren jeweils zweitem Eingang ein aus dem Abgleichsignal abgeleitetes Triggersignal anliegt und
- den mehreren Komparatoren ein logisches Verknüpfungselement nachgeordnet ist, an dessen Ausgang des Referenzsignal resultiert.

In einer möglichen Ausführungsform wird das Abgleichsignal über einen Eingangsverstärker verstärkt und dann das verstärkte Abgleichsignal drei Verstärkern mit einstellbaren, unterschiedlichen Verstärkungsfaktoren zugeführt und die drei aus dem Abgleichsignal abgeleiteten, unterschiedlich verstärkten Signale als Triggersignale den zweiten Eingängen der drei Komparatoren zugeführt.

Desweiteren kann vorgesehen werden, dass das aus der Aufsummation resultierende Abgleichsignal drei Verstärkern mit einstellbaren, unterschiedlichen Verstärkungsfaktoren zuführbar ist und die drei aus dem Abgleichsignal abgeleiteten, unterschiedlich verstärkten Signale als Triggersignale den zweiten Eingängen der drei Komparatoren zuführbar sind

Es ist ferner möglich, dass zwischen der Lichtquelle und der Maßverkörperung eine Blende mit einem Sendespalt angeordnet ist.

Desweiteren können auf einem Teil der Detektorelemente Abdeckgitter angeordnet sein, deren Gitterstriche orthogonal zur Längserstreckungsrichtung der Detektorelemente orientiert sind.

Vorzugsweise sind in Messrichtung beidseitig benachbart zur Referenzmarkierung in einer Referenzspur auf der Maßverkörperung Gitterstrukturen angeordnet, welche auf die darauf einfallenden Strahlenbündel eine optisch zerstreuende Wirkung ausüben.

Hierbei können die Gitterstrukturen in der Referenzspur eine Teilungsperiode besitzen, die der halben Teilungsperiode der auf der Maßverkörperung in einer Inkrementalspur angeordneten Inkrementalteilung entspricht.

Mit Vorteil weisen die Gitterstrukturen in der Referenzspur ein Strich-Teilungsperioden-Verhältnis von 0.25 auf.

Es kann vorgesehen sein, dass die Detektoranordnung vier Detektor-Arrays umfasst, und
- ein erstes und ein zweites Detektor-Array spiegelsymmetrisch zu einer ersten Detektor-Symmetrieachse ausgebildet sind, die sich in der Detektionsebene senkrecht zur Messrichtung erstreckt, wobei das erste und das zweite Detektor-Array in der Detektionsebene senkrecht zur Messrichtung versetzt zueinander angeordnet sind und
- ein drittes und ein viertes Detektor-Array spiegelsymmetrisch zu einer zweiten Detektor-Symmetrieachse ausgebildet sind, die sich in der Detektionsebene senkrecht zur Messrichtung erstreckt und in Messrichtung versetzt gegenüber der ersten Detektor-Symmetrieachse angeordnet ist, wobei das dritte und vierte Detektor-Array in der Detektionsebene senkrecht zur Messrichtung versetzt zueinander angeordnet sind.

Alternativ hierzu kann auch vorgesehen sein, dass die Detektoranordnung vier Detektor-Arrays umfasst, und
- ein erstes und ein zweites Detektor-Array spiegelsymmetrisch zu einer ersten Detektor-Symmetrieachse ausgebildet sind, die sich in der Detektionsebene senkrecht zur Messrichtung erstreckt, wobei das erste und das zweite Detektor-Array in Messrichtung zueinander benachbart angeordnet sind und
- ein drittes und ein viertes Detektor-Array spiegelsymmetrisch zu einer zweiten Detektor-Symmetrieachse ausgebildet sind, die sich in der Detektionsebene senkrecht zur Messrichtung erstreckt und in Messrichtung versetzt gegenüber der ersten Detektor-Symmetrieachse angeordnet ist,
wobei das dritte und vierte Detektor-Array in Messrichtung zueinander benachbart angeordnet sind und
- das erste und zweite Detektor-Array in der Erstreckungsrichtung der Detektor-Symmetrieachsen versetzt gegenüber dem dritten und vierten Detektor-Array angeordnet sind.

Über die erfindungsgemäßen Maßnahmen wird eine optische Positionsmesseinrichtung geschaffen, die auf einem Abtastprinzip mit divergenter Beleuchtung basiert und einen elektronischen Abgleich des erzeugten Referenzsignals ermöglicht. Die Lage des Referenzsignals in Bezug auf die Inkrementalsignale als auch dessen Breite lassen sich nunmehr ohne aufwändigen mechanischen Abgleich auf elektronischem Wege einstellen.

Insbesondere durch die Erzeugung der zwei Paare von Teil-Referenzsignalen mit jeweils gegenphasigem Signalverlauf resultiert eine gegenüber externen Störungen sehr unempfindliche Signalverarbeitung.

Die zur definierten Einstellung von Lage und Breite des Referenzsignals benötigten Komparator-Triggerschwellen werden aus einem Abgleichsignal abgeleitet, welches aus der optischen Abtastung der Referenzmarkierung resultiert. Auf diese Art und Weise ergibt sich eine erhöhte Stabilität der Referenzsignalerzeugung gegenüber Signalamplitudenänderungen, wie sie etwa durch Verschmutzung, Lichtquellen-Alterung oder Temperaturänderungen auftreten können.

Die erfindungsgemäße optische Positionsmesseinrichtung kann sowohl als Längenmessgerät zur Erfassung von linearen Verschiebebewegungen ausgebildet werden wie auch als rotatorisches Positionsmessgerät zur Erfassung von Rotationsbewegungen um eine Rotationsachse.

Ferner ist es möglich, sowohl Durchlichtvarianten als auch Auflichtvarianten der erfindungsgemäßen optischen Positionsmesseinrichtung auszubilden.

Weitere Einzelheiten und Vorteile der vorliegenden Erfindung seien anhand der nachfolgenden Beschreibung von Ausführungsbeispielen erfindungsgemäßer optischer Positionsmesseinrichtungen in Verbindung mit den Figuren erläutert.

Es zeigt
- Figur 1: eine stark schematisierte Darstellung des Abtaststrahlengangs zur Erzeugung eines Referenzsignals in einem Ausführungsbeispiel der erfindungsgemäßen Positionsmesseinrichtung;
- Figur 2: eine Draufsicht auf die Maßverkörperung der optischen Positionsmesseinrichtung aus Figur 1 mit einer Inkrementalteilung und einer Referenzmarkierung;
- Figur 3a: eine schematisierte Teil-Ansicht der Detektionsebene der erfindungsgemäßen optischen Positionsmesseinrichtung mit einem ersten Ausführungsbeispiel einer geeigneten Referenzsignal-Detektoranordnung;
- Figur 3b: einen vergrößerten Ausschnitt aus Figur 3a;
- Figur 4a, 4b: jeweils Paare von Teil-Referenzsignalen im Bereich der Referenzposition, die über die Referenzsignal-Detektoranordnung aus Figur 3 erzeugt werden;
- Figur 5a, 5b: die aus den Paaren von Teil-Referenzsignalen abgeleiteten Signale;
- Figur 6a, 6b: die aus den Signalen in Figur 5a, 5b abgeleiteten Summen- und Differenzsignale;
- Figur 7: das aus den Summen- und Differenzsignalen in Fig. 5a, 5b abgeleitete Referenzsignal;
- Figur 8: ein über die Referenzsignal-Detektoranordnung aus Figur 3a erzeugtes optisches Abgleichsignal;
- Figur 9: eine Schaltungsanordnung zur Verarbeitung der Teil-Referenzsignale aus der Referenzsignal-Detektoranordnung gemäß Figur 3a;
- Figur 10: eine Variante der Referenzsignal-Detektoranordnung aus Figur 3a;
- Figur 11: eine schematisierte Teil-Ansicht der Detektionsebene der erfindungsgemäßen optischen Positionsmesseinrichtung mit einem zweiten Ausführungsbeispiel einer geeigneten Referenzsignal-Detektoranordnung;
- Figur 12: eine Schaltungsanordnung zur Verarbeitung der Teil-Referenzsignale aus der Referenzsignal-Detektoranordnung gemäß Figur 11.

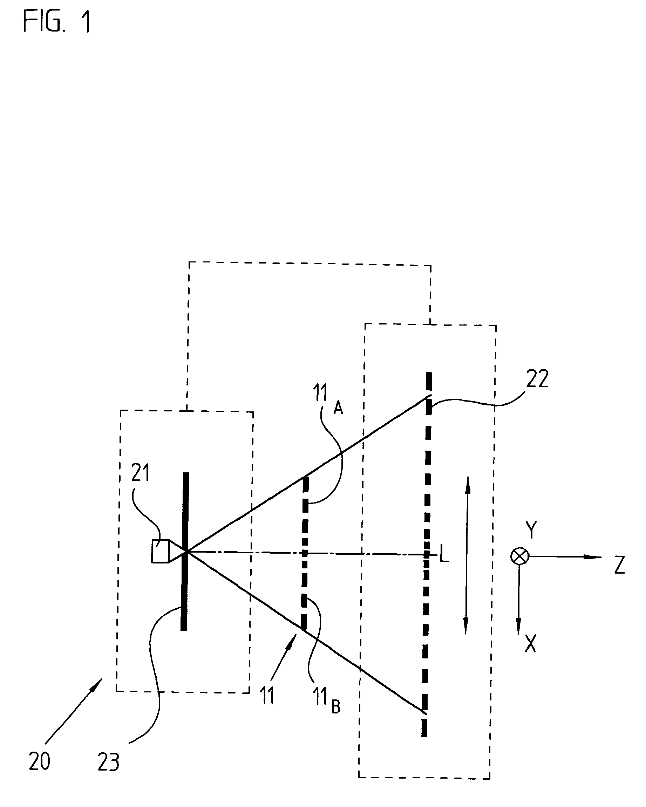

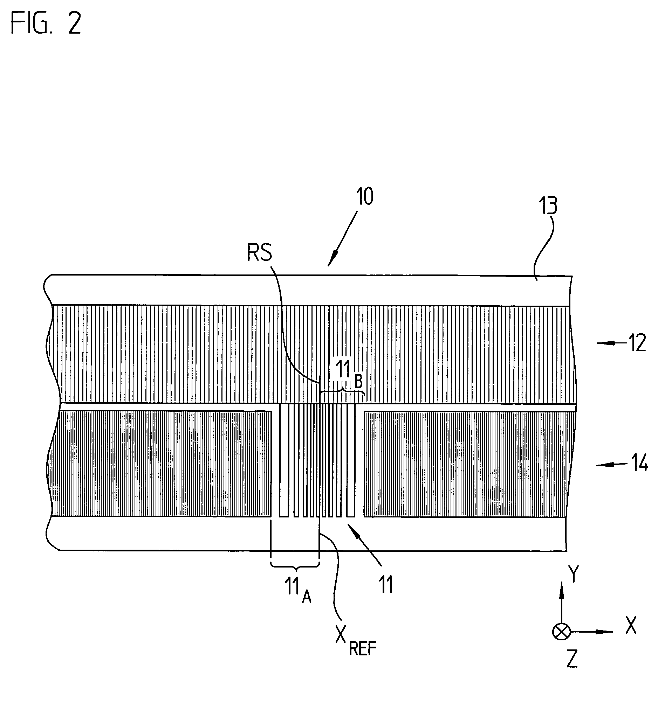

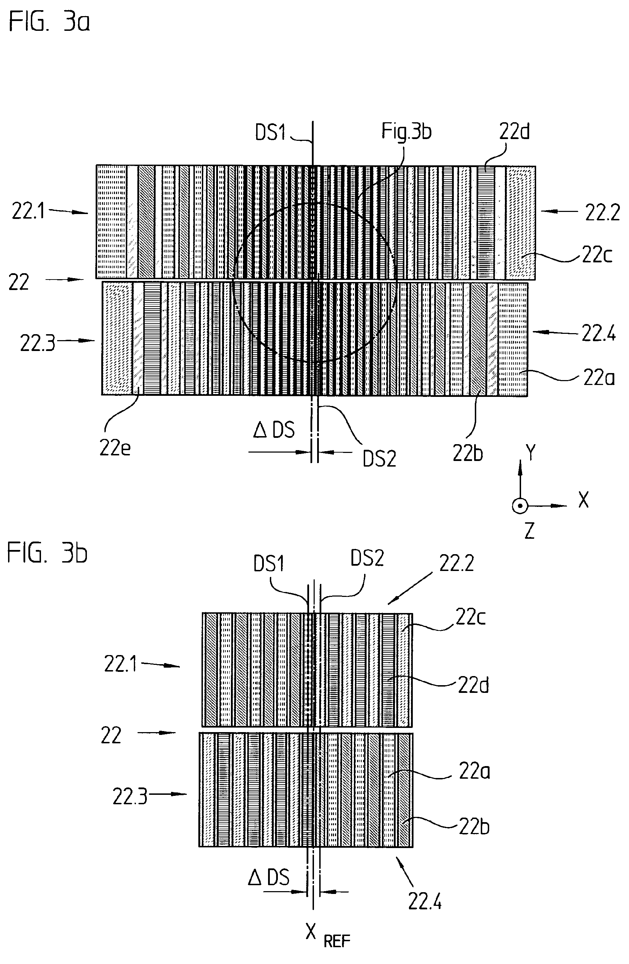

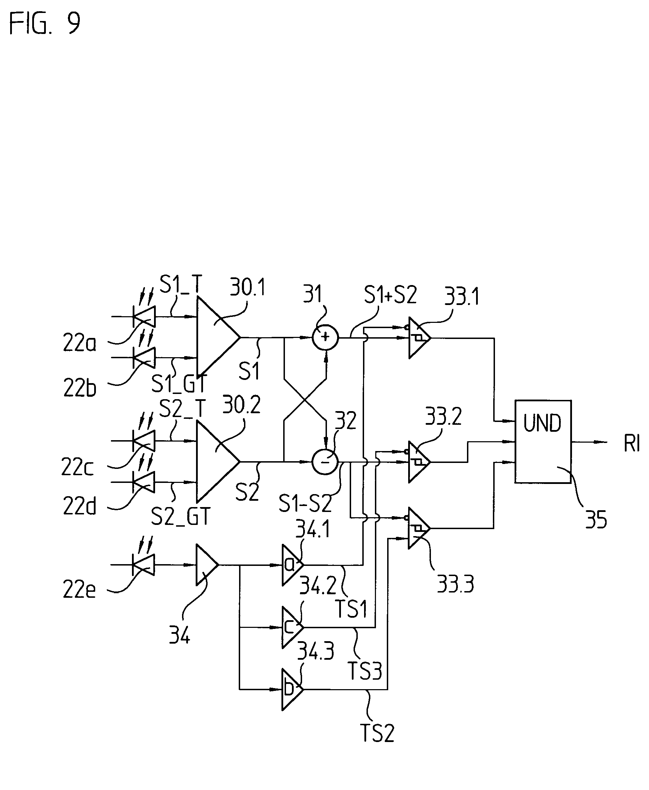

Anhand der Figuren 1 - 9 wird nachfolgend eine erste Ausführungsform der erfindungsgemäßen optischen Positionsmesseinrichtung im Detail beschrieben. Figur 1 zeigt hierbei in stark schematisierter Form den Abtaststrahlengang zur Erzeugung des Referenzimpulssignals, Figur 2 eine Draufsicht auf die Maßverkörperung im Bereich der Referenzmarkierung, Figur 3a eine Teil-Ansicht der Detektionsebene, Figur 3b einen vergrößerten Ausschnitt aus Figur 3a, die Figuren 4a - 8 verschiedene Signalverläufe zur Erläuterung der Signalverarbeitung und Figur 9 eine geeignete Schaltungsanordnung zur Erzeugung des Referenzsignals.

Im dargestellten Ausführungsbeispiel ist die erfindungsgemäße optische Positionsmesseinrichtung als Durchlicht-Längenmessgerät ausgebildet und umfasst eine Abtasteinheit 20, die gegenüber der Maßverkörperung 10 in Messrichtung x beweglich angeordnet ist. Maßverkörperung 10 und Abtasteinheit 20 sind z.B. mit zwei zueinander in Messrichtung x beweglich angeordneten Objekten verbunden. Hierbei kann es sich etwa um zwei zueinander bewegliche Maschinenteile handeln. Über die erzeugten, positionsabhängigen Ausgangssignale (Inkrementalsignale, Referenzimpulssignal) der erfindungsgemäßen optischen Positionsmesseinrichtung kann eine nachgeordnete Steuereinheit die Bewegung dieser Maschinenteile in bekannter Art und Weise geeignet steuern.

Die Darstellung in Figur 1 ist selbstverständlich stark schematisiert, insbesondere der für das Durchlichtsystem erforderliche Maßverkörperungs-Umgriff der Abtasteinheit 20 ist lediglich prinzipiell durch die strichlinierte Verbindung der lichtquellenseitigen Teile und der detektionsseitigen Teile der Abtasteinheit 20 angedeutet; ebenso ist in Figur 1 auf Seiten der Maßverkörperung lediglich die abgetastete Referenzmarkierung 11 schematisch angedeutet.

Die Maßverkörperung 10 umfasst im vorliegenden Beispiel eine sich in Messrichtung x erstreckende lineare Inkrementalteilung 12, die auf einem Teilungsträger 13 angeordnet ist. Die Inkrementalteilung 12 besteht aus periodisch mit der Teilungsperiode TP_{INC} = 8 µm in Messrichtung x angeordneten Teilbereichen mit unterschiedlichen optischen Eigenschaften, die sich in der Teilungsebene in y-Richtung erstrecken. Im dargestellten Beispiel ist die Inkrementalteilung 12 als Durchlicht-Phasengitter mit einem Phasenhub von 180° und einem Teilungsverhältnis von 1:1 ausgebildet.

Benachbart zur Spur mit der Inkrementalteilung 12 ist auf Seiten der Maßverkörperung 10 eine Referenzspur vorgesehen, in der eine Referenzmarkierung 11 an einer definierten Referenzposition x_{REF} auf dem Teilungsträger 13 angeordnet ist; grundsätzlich können selbstverständlich auch an mehreren Referenzpositionen entsprechende Referenzmarkierungen angeordnet werden. Die Referenzmarkierung 11 ist wie die Inkrementalteilung 12 ebenfalls als Phasengitter mit einem Phasenhub von 180° ausgebildet und besteht aus Strukturen mit alternierend angeordneten Teilbereichen 11.1, 11.2, die unterschiedliche phasenschiebende Wirkungen auf die einfallenden Strahlenbündel ausüben

In der Referenzspur sind in Messrichtung x beidseitig benachbart zur Referenzmarkierung 11 desweiteren jeweils noch periodische Gitterstrukturen 14 angeordnet. Im dargestellten Ausführungsbeispiel erstrecken sich die Gitterstrukturen 14 hierbei über die gesamte Länge der Referenzspur und sind in der Referenzspur somit überall angeordnet, wo keine Referenzmarkierung 11 vorgesehen ist. Die zusätzlichen Gitterstrukturen 14 in der Referenzspur besitzen eine Teilungsperiode TP_{G}, die von der Teilungsperiode TP_{INC} der Inkrementalteilung 12 abweicht; beispielsweise wird die Teilungsperiode TP_{G} der Gitterstrukturen 14 gleich der der Hälfte der Teilungsperiode der Inkrementalteilung TP_{INC} gewählt; das Strich-Teilungsperioden-Verhältnis beträgt für die Gitterstrukturen 14 den Wert 0.25. Die Gitterstrukturen 14 sind dergestalt ausgebildet, dass mehrere Beugungsordnungen (0., +/- 1., +/- 2.) mit ähnlichen Beugungseffizienzen resultieren. Die Gitterstrukturen 14 üben so eine optisch zerstreuende Wirkung auf die darauf einfallenden Strahlenbündel aus. Als Folge werden eventuelle Verschmutzungen auf der Maßverkörperung 10 unscharf in die Detektionsebene abgebildet und beeinträchtigen derart die Referenzsignalerzeugung nur minimal. Ferner wird über die angegebene Dimensionierung der Gitterstrukturen 14 sichergestellt, dass sich die resultierenden Signale aus der Inkremental- und der Referenzspur nur gering gegenseitig beeinflussen.

Wie aus den Figuren 1 und 2 ersichtlich ist, umfasst die Referenzmarkierung 11 an der Referenzposition X_{REF} zwei zu einer Referenzmarkierungs-Symmetrieachse RS spiegelsymmetrisch angeordnete Referenzmarkierungs-Teilfelder 11_{A}, 11_{B}. Jedes der beiden Referenzmarkierungs-Teilfelder 11_{A}, 11_{B} besteht aus einer sich in Messrichtung x erstreckenden Struktur bzw. Gitterteilungs-Struktur mit sich jeweils sich örtlich verändernden Teilungsperioden. Im dargestellten Beispiel weisen hierbei jeweils die Strukturen benachbart zur Referenzmarkierungs-Symmetrieachse RS die kleinsten Teilungsperioden auf, in Messrichtung x nach außen hin sind jeweils stetig größer werdende Teilungsperioden vorgesehen. Die Strukturen in den beiden Referenzmarkierungs-Teilfeldern 11_{A}, 11_{B} der Referenzmarkierung 11 sind demzufolge als sog. gechirpte Teilungsstrukturen ausgebildet, wobei ein zur Referenzmarkierungs-Symmetrieachse RS spiegelsymmetrischer Chirpverlauf in den beiden Referenzmarkierungs-Teilfeldern 11_{A}, 11_{B} vorgesehen ist. In Bezug auf die detaillierte Ausbildung der gechirpten Referenzmarkierungs-Teilfelder 11_{A}, 11_{B} sei desweiteren auf die bereits eingangs erwähnte DE 10 2008 044 858 A1 der Anmelderin verwiesen. In dieser Druckschrift wird gemäß den Gleichungen 1.1, 1.2 der Chirpverlauf in der Referenzmarkierung 11 über die maßverkörperungsseitige Teilungsfrequenz f_{MS} (x) beschrieben. Im vorliegenden Ausführungsbeispiel werden als charakteristische Größen in den Gleichungen 1.1 und 1.2 f₀ = 7.2 1/mm und L = 1.25 mm gewählt, wobei f₀ die mittlere maßverkörperungsseitige Teilungsfrequenz angibt und L die Länge der Struktur in einem Referenzmarkierungs-Teilfeld 11_{A}, 11_{B} in Messrichtung x.

Zur Erzeugung der verschiebungsabhängigen Ausgangssignale in Form der periodischen Inkrementalsignale und des mindestens einen Referenzimpulssignals RI an mindestens einer definierten Referenzposition X_{REF}, sind in der Abtasteinheit 20 eine Reihe von Komponenten angeordnet, die der Einfachheit halber zusammenfassend auch als Abtastmittel bezeichnet seien. Zu den für die Erzeugung des Referenzimpulssignals RI nötigen Abtastmitteln gehören im vorliegenden Beispiel eine divergent in Richtung der Maßverkörperung 10 abstrahlende Lichtquelle 21, ein oder mehrere Gitter sowie eine speziell ausgebildete und auf die Referenzmarkierung 11 abgestimmte Referenzsignal-Detektoranordnung 22. Im Ausführungsbeispiel mit einem Abtaststrahlengang zur Referenzsignal-Erzeugung gemäß Figur 1 ist als Gitter in der Abtasteinheit 20 ein Blende mit einem Sendespalt 23 vorgesehen, die zwischen der Lichtquelle 21 und der Maßverkörperung 10 angeordnet ist.

Die Referenzsignal-Detektoranordnung 22, die in Figur 3a in einer Draufsicht dargestellt ist, besteht in der vorliegenden Erfindung aus mindestens vier Detektor-Arrays 22.1 - 22.4. Diese umfassen jeweils eine Mehrzahl von rechteckförmigen optoelektronischen Detektorelementen 22a - 22e in Form von Photodioden, die sich in Messrichtung x erstreckend angeordnet sind. Die Rechtecklängsachse der Detektorelemente 22a - 22e ist in der angegebenen y-Richtung, d.h. senkrecht zur Messrichtung x in der Detektionsebene orientiert.

Wie aus Figur 3a ersichtlich, sind ein erstes Detektor-Array 22.1 und ein zweites Detektor-Array 22.4 der Referenzsignal-Detektoranordnung 22 hierbei spiegelsymmetrisch in Bezug auf eine erste Detektor-Symmetrieachse DS1 ausgebildet, die sich in der Detektionsebene senkrecht zur Messrichtung x erstreckt. Das erste Detektor-Array 22.1 und das zweite Detektor-Array 22.4 sind in der Detektionsebene senkrecht zur Messrichtung x, d.h. in der angegebenen y-Richtung, versetzt zueinander angeordnet. Wie aus der vergrößerten Darstellung des zentralen Bereichs der Detektoranordnung 22 in Figur 3b hervorgeht, sind in diesem Ausführungsbeispiel mit Ausnahme desjenigen Detektorelements, durch welches die erste Detektor-Symmetrieachse DS1 verläuft, hierbei alle Detektorelemente 22a, 22b, 22e des zweiten Detektor-Arrays 22.4 in y-Richtung versetzt zum ersten Detektor-Array 22.1 angeordnet

Analog hierzu sind ein gemäß Figur 3a ein drittes Detektor-Array 22.3 und ein viertes Detektor-Array 22.2 der Referenzsignal-Detektoranordnung 22 ausgebildet bzw. angeordnet. Das heißt, dass das vierte Detektor-Array 22.2 spiegelsymmetrisch zum dritten Detektor-Array 22.3 in Bezug auf eine zweite Detektor-Symmetrieachse DS2 ausgebildet, die sich ebenfalls in der Detektionsebene senkrecht zur Messrichtung x erstreckt, gegenüber der ersten Detektor-Symmetrieachse DS1 in Messrichtung aber um den Betrag ΔDS versetzt ist. Das dritte Detektor-Array 22.3 und das vierte Detektor-Array 22.2 sind in der Detektionsebene wiederum senkrecht zur Messrichtung x, d.h. in der angegebenen y-Richtung, versetzt zueinander angeordnet. Wie ebenfalls aus der vergrößerten Darstellung des zentralen Bereichs der Detektoranordnung 22 in Figur 3b hervorgeht, sind in diesem Ausführungsbeispiel mit Ausnahme desjenigen Detektorelements, durch welches die zweite Detektor-Symmetrieachse DS2 verläuft, alle Detektorelemente 22c, 22d, 22e des vierten Detektor-Arrays 22.2 in y-Richtung versetzt zum dritten Detektor-Array 22.3 angeordnet

Es resultiert in dieser Ausführungsform somit eine Über-Kreuz-Anordnung der spiegelsymmetrisch ausgebildeten ersten und zweiten Detektor-Arrays 22.1, 22.4 bzw. dritten und vierten Detektor-Arrays 22.3, 22.2 in der erfindungsgemäßen Referenzsignal-Detektoranordnung 22. Diese erweist sich insbesondere bei inhomogenen Intensitätsverteilungen in der Detektionsebene als vorteilhaft, wie sie etwa bei einer Abtastung mit divergenter Beleuchtung vorliegt.

Die Detektorelemente 22a, 22b, 22e des ersten und zweiten Detektor-Arrays 22.1, 22.4 sind gemäß Figur 3a entlang der Messrichtung x derart angeordnet, dass sich ausgehend von der ersten Detektor-Symmetrieachse DS1 in Messrichtung x die Mittenabstände zwischen benachbarten Detektorelementen 22a, 22b, 22e in der gleichen Richtung verändern wie ausgehend von der Referenzmarkierungs-Symmetrieachse RS die Teilungsperioden der Strukturen in den beiden Referenzmarkierungs-Teilfeldern 11_{A}, 11_{B}. Das erste und zweite Detektor-Array 22.1, 22.4 der Referenzsignal-Detektoranordnung 22 besitzt demzufolge ebenso wie die Referenzmarkierung 11 eine symmetrisch gechirpte Struktur bzgl. der Anordnung der entsprechenden Detektorelemente 22a, 22b, 22e.

Analog hierzu ist auch die Ausbildung des dritten und vierten Detektor-Arrays 22.3, 22.2 in der Referenzsignal-Detektoranordnung 22 vorgesehen, wobei hier eine symmetrisch gechirpte Struktur bzw. Anordnung der Detektorelemente 22c, 22d, 22e bzgl. der zweiten Detektor-Symmetrieachse DS2 vorliegt; wie vorher erwähnt ist die zweite Detektor-Symmetrieachse DS2 gegenüber der ersten Detektor-Symmetrieachse DS1 um den Betrag ΔDS in Messrichtung versetzt angeordnet.

Im ersten und zweiten Detektor-Array 22.1, 22.4 bzw. im dritten und vierten Detektor-Array 22.3, 22.2 erfolgt die symmetrisch gechirpte Anordnung der Detektorelemente 22a - 22e jeweils abgestimmt auf die symmetrisch gechirpte Ausbildung der Referenzmarkierung 11 auf der Maßverkörperung 10. Dies bedeutet, dass sich die Abstände zwischen benachbarten Detektorelementen 22a - 22e in den Detektor-Arrays 22.1 - 22.4 analog zu den Abständen der Teilungsstrukturen in den Referenzmarkierungs-Teilfeldern 11_{A}, 11_{B} ändern. Im Hinblick auf die konkrete Anordnung der einzelnen Detektorelemente 22.a - 22.d zur Erfassung der phasenverschobenen Teil-Referenzsignale in den beiden Detektor-Array-Paaren sei wiederum auf die DE 10 2008 044 858 A1 der Anmelderin verwiesen, insbesondere dort die Gleichungen 2.1 und 2.2. Als charakteristische Größen werden für die vorliegende Ausbildung der Detektor-Arrays 22.1 - 22.4 in den Gleichungen 2.1 und 2.2 f₀ = 7.2 1/mm, L = 1.25 mm und k = 1 gewählt, wobei f₀ die mittlere maßverkörperungsseitige Teilungsfrequenz angibt, L die Länge der Struktur in einem Referenzmarkierungs-Teilfeld 11_{A}, 11_{B} in Messrichtung x und k den Typ der optischen Abtastung (k = 1: Signalgewinnung über +/- 1. Beugungsordnungen; k = 2: Signalgewinnung über 0., +/- 1. Beugungsordnungen).

Aus den in Figur 3a jeweils identisch dargestellten Detektorelementen 22a - 22d resultieren aus der Abtastung der Referenzspur jeweils identische Teil-Referenz-Signale, die dann anschließend zur Erzeugung eines Referenzsignals RI weiterverarbeitet werden. weiter. So liefern die Detektorelemente 22a aus dem ersten und zweiten Detektor-Array 22.1, 22.4 ein Teil-Referenzsignal, das nachfolgend mit dem Bezugszeichen S1_T bezeichnet wird; die Detektorelemente 22b aus dem ersten und zweiten Detektor-Array 22.1, 22.4 liefern das Teil-Referenzsignal S1_GT. Die Detektorelemente 22c aus dem dritten und vierten Detektor-Array 22.3, 22.2 liefern das Teil-Referenzsignal S2_T; die Detektorelemente 22d aus dem dritten und vierten Detektor-Array 22.3, 22.2 liefern das Teil-Referenzsignal S2_GT. Somit werden über die dargestellte Referenzsignal-Detektoranordnung insgesamt vier Teil-Referenzsignale S1_T, S1_GT, S2_T, S2_GT erzeugt, die dann zu einem letztlich resultierenden Referenzsignal RI weiterverarbeitet werden.

Zwischen den verschiedenen Detektorelementen 22a - 22d der Detektor-Arrays 22.1 - 22.4, die die verschiedenen Teil-Referenzsignale S1_T, S1_GT bzw. S2_T, S2_GT liefern, sind im vorliegenden Ausführungsbeispiel in der Referenzsignal-Detektoranordnung 22 jeweils noch Gleichlicht-Detektorelemente 22e angeordnet. Über die Gleichlicht-Detektorelemente 22e wird ein Signal erzeugt, aus dem ein möglichst wenig moduliertes Abgleichsignal gewonnen wird und das bei der Signal-Weiterverarbeitung zur Erzeugung des Referenzsignals RI dient; zur konkreten Signalverarbeitung sei auf den weiteren Verlauf der Beschreibung verwiesen.

Im dargestellten Ausführungsbeispiel der Referenzsignal-Detektoranordnung 22 besitzen die Detektorelemente 22a - 22d, aus denen die Teil-Referenzsignale S1_T, S1_GT, S2_T, S2_GT erzeugt werden, in Messrichtung x jeweils eine Breite, die etwa einem Drittel der lokalen Teilungsperiode des jeweiligen Detektor-Arrays 22.1 - 22.4 entspricht. Pro lokaler Teilungsperiode des Detektor-Arrays 22.1 - 22.4 sind wie aus Figur 3 ersichtlich jeweils zwei Gleichlicht-Detektorelemente 22e vorgesehen, die jeweils eine Breite in Messrichtung x besitzen, die etwa einem Sechstel der lokalen Teilungsperiode des jeweiligen Detektor-Arrays 22.1 - 22.4 entspricht.

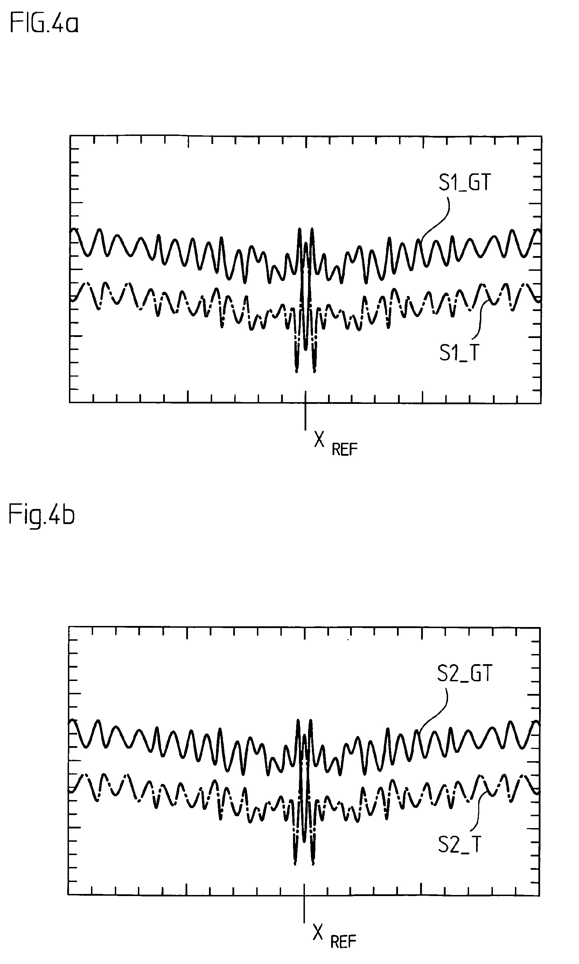

Über eine derartige Ausbildung der Referenzsignal-Detektoranordnung 22 ist somit gewährleistet, dass aus der Abtastung der Referenzmarkierung 11 über die Referenzsignal-Detektoranordnung 22 ein erstes Paar von Teil-Referenzsignalen S1_T, S1_GT sowie ein zweites Paar von Teil-Referenzsignalen S2_GT, S2_GT resultiert. Das erste Paar von Teil-Referenzsignalen S1_T, S1_GT ist hierbei entlang der Messrichtung x gegenüber dem zweiten Paar von Teil-Referenzsignalen S2_T, S2_GT um einen Versatzbetrag versetzt; typischerweise beträgt der Versatzbetrag zwischen dem ersten und zweiten Paar von Teil-Referenzsignalen S1_T, S1_GT, S2_T, S2_GT einige Signalperioden des Inkrementalsignals, das aus der Abtastung der Inkrementalspur 12 resultiert. Die Signalverläufe der Teil-Referenzsignale S1_T, S1_GT bzw. S2_T, S2_GT eines Paares sind jeweils gegenphasig bzw. invers zueinander; dies bedeutet, dass im Fall eines Signalmaximums des Teil-Referenzsignals S1_T bzw. S2_T im ersten bzw. zweiten Paar im Bereich der Referenzposition X_{REF} das zugehörige Teil-Referenzsignal S1_GT bzw. S2_GT dann dort ein Signalminimum aufweist oder umgekehrt. Der Verlauf der derart erzeugten, vier verschiedenen Teil-Referenzsignale S1_T, S1_GT, S2_T, S2_GT ist in den Figuren 4a und 4b im Bereich der Referenzposition X_{REF} dargestellt.

Aufgrund des vorgesehenen Versatzes ΔDS der Symmetrieachsen DS1, DS2 des ersten und zweiten Paars von Detektor-Arrays 22.1, 22.4 bzw. 22.3, 22.2 weisen die Teil-Referenzsignale S1_T, S1_GT gegenüber den Teil-Referenzsignalen S2_T, S2_GT wie bereits oben erwähnt, in Messrichtung x einen Versatzbetrag ΔDS/2 auf, der aus dem genutzten optischen Abtastprinzip resultiert.

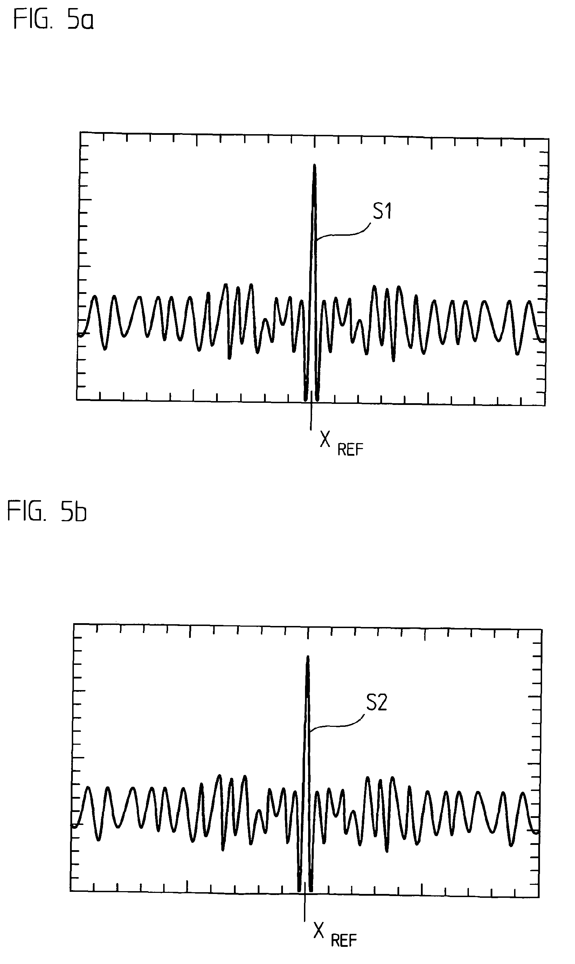

Die weitere Verarbeitung der derart erzeugten Teil-Referenzsignale S1_T, S1_GT, S2_T, S2_GT zu einem ausgangsseitig resultierenden, hochauflösenden Referenzsignal RI wird für das vorliegende Ausführungsbeispiel nachfolgend anhand der Figuren 9 sowie 5a - 8 erläutert; Figur 9 zeigt hierbei eine geeignete Schaltungsanordnung zur Signalverarbeitung, die Figuren 5a - 8 verschiedene Signale, die im Verlauf der Signalverarbeitung resultieren.

Die über die Detektorelemente 22a - 22d erzeugten Teil-Referenzsignale S1_T, S1_GT, S2_T, S2_GT werden wie in Figur 9 ersichtlich paarweise zwei Differenzverstärkern 30.1, 30.2 zugeführt. Hierbei werden jeweils die gegenphasigen Teil-Referenzsignale S1_T, S1_GT bzw. S2_T, S2_GT auf die entsprechenden Eingänge der beiden Differenzverstärker 30.1, 30.2 geschaltet. Am Ausgang der beiden Differenzverstärker 30.1, 30.2 resultiert jeweils ein pulsförmiges Signal S1, S2; der Verlauf der pulsförmigen Signale S1, S2 im Bereich der Referenzposition X_{REF} ist in den Figuren 5a, 5b veranschaulicht.

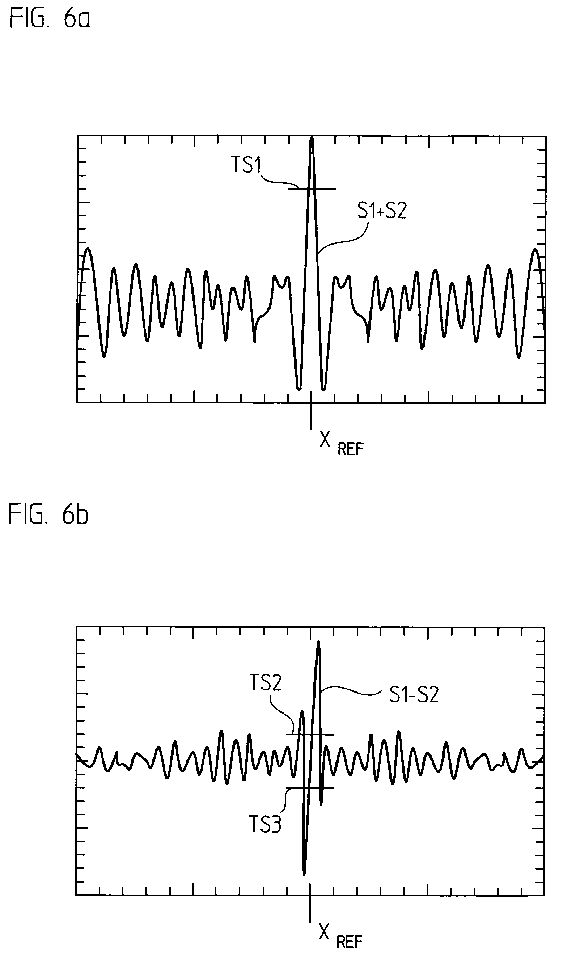

Über das den beiden Differenzverstärkern 30.1, 30.2 nachgeordnete Summenbildungselement 31 und das Differenzbildungselement 32 wird aus den pulsförmigen Signalen S1, S2 sodann ein Summensignal S1+S2 sowie ein Differenzsignal S1-S2 gebildet. Das Summensignal S1+S2 ist im Bereich der Referenzposition X_{REF} in Figur 6a dargestellt, das Differenzsignal S1-S2 in Figur 6b.

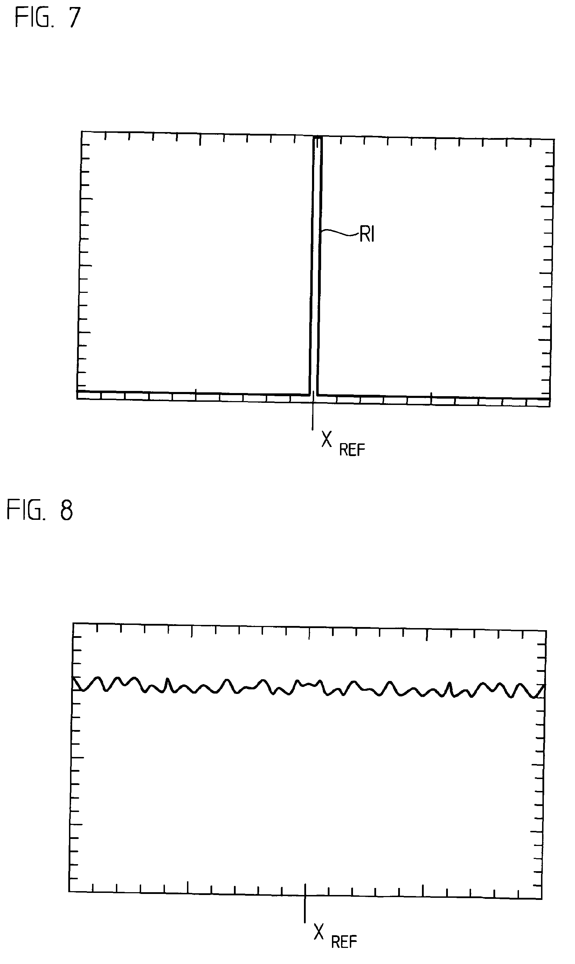

Das Summensignal S1+S2 wird dann einem ersten Eingang eines ersten Komparators 33.1 zugeführt; das Differenzsignal S1-S2 den jeweils ersten Eingängen eines zweiten und dritten Komparators 33.2, 33.3. An den jeweiligen zweiten Eingängen der verschiedenen Komparatoren 33.1, 33.2, 33.3 liegen Triggersignale TS1, TS3, TS2 an, welche aus dem Abgleichsignal abgeleitet sind, welches über die Gleichlicht-Detektorelemente 22e gewonnen wird. Das über die Gleichlicht-Detektorelemente 22e erzeugte Signal wird hierbei zunächst über ein Verstärkerelement 34 zu einem Abgleichsignal S_{A} verstärkt; in Figur 8 ist der weitgehend unmodulierte Verlauf des Abgleichsignals S_{A} im Bereich der Referenzposition X_{REF} dargestellt. Das Abgleichsignal S_{A} wird dann über drei weitere Verstärkerelemente 34.1, 34.2, 34.3 mit unterschiedlichen Verstärkungsfaktoren a, c, b zu den drei Triggersignalen TS1 = a • S_{A}, TS2 = b • S_{A}, TS3 = c • S_{A} verstärkt, die an den jeweils zweiten Eingängen der drei Komparatoren 33.1, 33.3, 33.2 anliegen. Den Komparatoren 33.1, 33.2, 33.3 nachgeordnet ist ein logisches Verknüpfungselement 35, ausgebildet als UND-Verknüpfungselement. Am Ausgang des Verknüpfungselements 35 resultiert bei einer geeigneten Einstellung der verschiedenen Triggersignale TS1, TS2, TS3 dann am Ort der Referenzposition X_{REF} das Referenzsignal RI, welches in Figur 7 dargestellt ist.

Eine Ausgabe des Referenzsignals RI erfolgt hierbei über das logische UND-Verknüpfungselement 35, wenn alle drei nachfolgenden Bedingungen i), ii), iii) erfüllt sind:
i) S1 + S2 > TS1
ii) S1 - S2 > TS3
iii) S1 - S2 < TS2

Über die definierte Einstellung der Triggersignale TS2, TS3, d.h. durch die Wahl der Verstärkungsfaktoren b, c der Verstärkerelemente 34.3, 34.2, kann somit die Lage und Breite des Referenzsignals RI in der erfindungsgemäßen optischen Positionsmesseinrichtung elektronisch definiert eingestellt werden.

Vorzugsweise wird das Triggersignal TS1 hierzu so gewählt, dass dieses nahe Null liegt, jedoch einen positiven Wert besitzt; in Figur 6a ist ein entsprechendes Triggersignal TS1 in Verbindung mit dem Summensignal S1+S2 gezeigt. Auf diese Art und Weise kann sichergestellt werden, dass auch bei abgeschalteter Lichtquelle kein Referenzsignal RI versehentlich erzeugt wird.

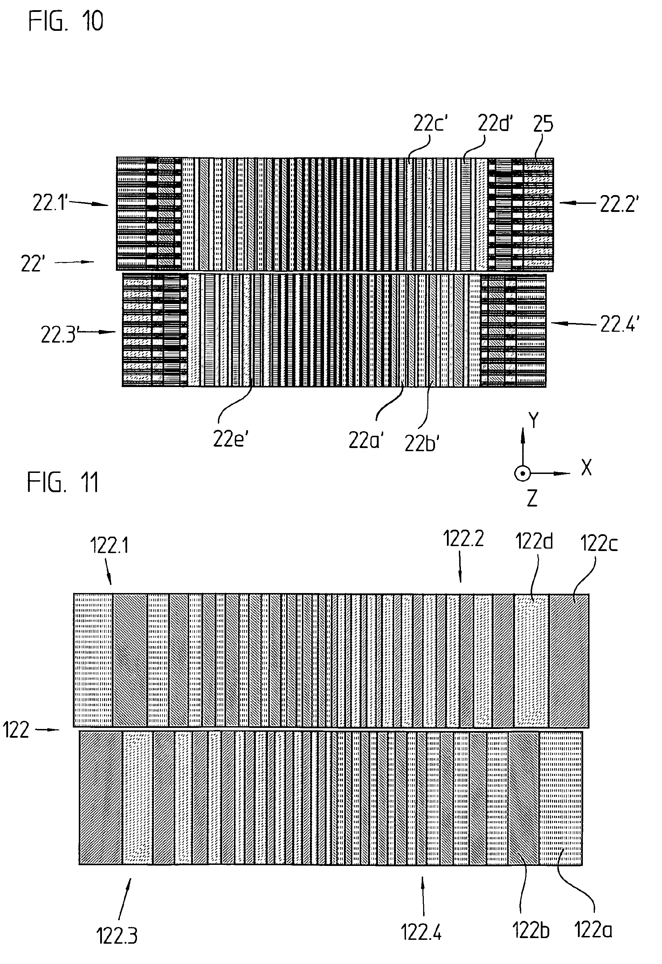

Eine geringfügig abgewandelte Variante der Referenzsignal-Detektoranordnung 22' des ersten Ausführungsbeispiels der erfindungsgemäßen optischen Positionsmesseinrichtung ist in Figur 10 schematisiert dargestellt. Die Anordnung und Ausbildung der verschiedenen Detektor-Arrays 22.1' - 22.4' sowie die Anordnung der Detektorelemente 22a' - 22e' entspricht hierbei derjenigen aus Figur 3a. Zusätzlich ist jedoch vorgesehen, dass auf einem Teil der Detektorelemente 22a' - 22e' Abdeckgitter 25 angeordnet sind, deren Gitterstriche in x-Richtung orientiert sind, d.h. orthogonal zur Längserstreckungsrichtung der Detektorelemente 22a' - 22e'. Hierbei sind lediglich die in Bezug auf die Symmetrieachsen außenliegenden Detektorelemente 22a' - 22e' der Referenzsignal-Detektoranordnung 22' mit derartigen Abdeckgittern 25 versehen. Der Abdeckungsgrad der lichtempfindlichen Flächen der Detektorelemente 22a' - 22e' beträgt etwa 50%. Auf diese Art und Weise wird die Gewichtung der in den Detektor-Arrays 22.1' - 22.4' außenliegenden Detektorelemente 22a' - 22e' bei der Signalerzeugung reduziert. Dies erweist sich etwa im Fall von Verschmutzungen im Bereich der Referenzmarkierung auf der Maßverkörperung als vorteilhaft, da in diesem Fall die Signalanteile der äußeren Detektorelemente 22a' - 22e' unsymmetrisch wegfallen und die Signalverarbeitung beeinträchtigen würden.

Die Abdeckgitter 25 können z.B. auf einer Abtastplatte angeordnet sein, die oberhalb der Referenzsignal-Detektoranordnung 22' in der Abtasteinheit platziert ist. Ferner wäre es möglich, die Abdeckgitter 25 als metallische Strukturierung in den entsprechenden Bereichen unmittelbar auf der Referenzsignal-Detektoranordnung 22' anzubringen. Desweiteren könnte vorgesehen auch werden, die Detektorelemente 22a' - 22e'e in diesen Bereichen in Längsrichtung zu strukturieren, um derart ebenfalls den optischen Effekt eines Abdeckgitters 25 zu erzielen.

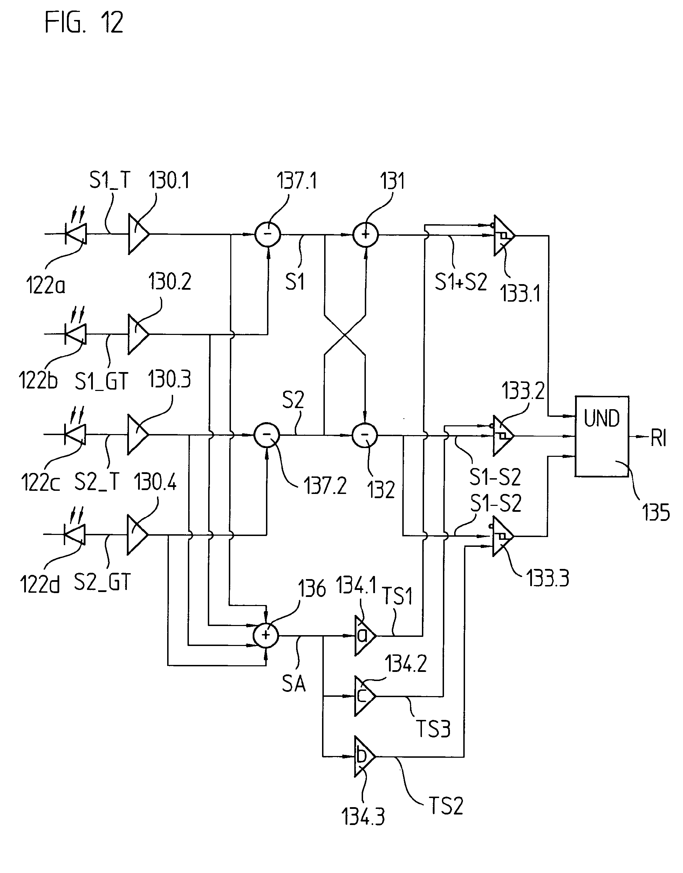

Abschließend sei eine zweite Ausführungsform der erfindungsgemäßen optischen Positionsmesseinrichtung anhand der Figuren 11 und 12 erläutert. Figur 11 zeigt hierbei eine Ansicht der Referenzsignal-Detektoranordnung, Figur 12 die Schaltungsanordnung zur Erzeugung des Referenzsignals RI.

Nachfolgend werden lediglich die maßgeblichen Unterschiede zum ersten Ausführungsbeispiel beschrieben. Diese bestehen im wesentlichen in der Art und Weise der Erzeugung des Abgleichsignals. Während im ersten Ausführungsbeispiel als Mittel zur Erzeugung desselbigen separate Gleichlicht-Detektorelemente in den verschiedenen Detektor-Arrays vorgesehen waren, wird im vorliegenden Beispiel das Abgleichsignal aus einer Aufsummierung aller Teil-Referenzsignale der Detektorelemente aus den Detektor-Arrays gewonnen.

Für die in Figur 11 dargestellte Referenzsignal-Detektoranordnung bedeutet dies, dass in den vier Detektor-Arrays 122.1 - 122.4 keine separaten Gleichlicht-Detektorelemente vorgesehen sind, sondern lediglich diejenigen Detektorelemente 122a - 122d, die die Teil-Referenzsignale S1_T, S1_GT, S2_T, S2_GT erzeugen. Als Folge des Fehlens der Gleichlicht-Detektorelemente besitzen die Detektorelemente 122a - 122d, aus denen die Teil-Referenzsignale S1_T, S1_GT, S2_T, S2_GT erzeugt werden, in Messrichtung x jeweils eine Breite, die der Hälfte der lokalen Teilungsperiode des jeweiligen Detektor-Arrays 122.1 - 122.4 entspricht.

Als Mittel zur Erzeugung des Abgleichsignals S_{A} ist in der Schaltungsanordnung gemäß Figur 12 ein Summationselement 136 vorgesehen, dem die vier Teil-Referenzsignale S1_T, S1_GT, S2_T, S2_GT zur Aufsummierung zum Abgleichsignal S_{A} zugeführt werden. Die weitere Verarbeitung des Abgleichsignals S_{A} über die Verstärkerelemente 134.1 - 134.3 und die Zuführung der unterschiedlich verstärkten Signale als Triggersignale TS1 - TS3 an die jeweils zweiten Eingänge dreier Komparatoren 133.1 - 133.3 erfolgt analog zum ersten Ausführungsbeispiel.

Die vier über die Detektorelemente 122a - 122d erzeugten Teil-Referenzsignale S1_T, S1_GT, S2_T, S2_GT werden über Verstärkerelemente 130.1 - 130.4 verstärkt und anschließend wie dargestellt über die Differenzbildungselemente 137.1, 137.2 paarweise in Differenz verschaltet. Am Ausgang der beiden Differenzbildungselemente 137.1, 137.2 resultieren die pulsförmigen Signale S1, S2, welche dann ebenfalls wieder analog zum ersten Ausführungsbeispiel über das Summenbildungselement 131 und das Differenzbildungselement 132 weiterverarbeitet werden, bevor wie gezeigt Summen- und Differenzsignale S1+S2, S1-S2 an die ersten Eingänge der drei Komparatoren 133.1 - 133.3 gelegt werden. Am Ausgang des logischen Verknüpfungselements 135 resultiert wiederum das Referenzsignal RI.

Neben den konkret erläuterten Ausführungsbeispielen gibt es im Rahmen der vorliegenden Erfindung selbstverständlich noch weitere Ausgestaltungsmöglichkeiten.

So könnten etwa die Triggersignale TS1 - TS3 alternativ auch vollständig statisch aus geeigneten Spannungsquellen erzeugt werden. Ferner wäre es auch möglich, lediglich das Triggersignal TS1 wie oben beschrieben aus dem Abgleichsignal zu erzeugen und die beiden anderen Triggersignale TS2, TS3 statisch aus geeigneten Spannungsquellen.

Desweiteren wäre es möglich, in der Referenzsignal-Detektoranordnung anstelle der oben erläuterten Über-Kreuz-Anordnung der vier Detektor-Arrays auch eine alternative Anordnung zu wählen. So könnte hierbei wiederum ein erstes und ein zweites Detektor-Array spiegelsymmetrisch zu einer ersten Detektor-Symmetrieachse ausgebildet werden, die sich in der Detektionsebene senkrecht zur Messrichtung erstreckt. Das erste und das zweite Detektor-Array würden im Unterschied zum oben erläuterten Ausführungsbeispiel nunmehr jedoch in Messrichtung zueinander benachbart angeordnet und nicht in y-Richtung versetzt. Ferner würde ein drittes und ein viertes Detektor-Array spiegelsymmetrisch zu einer zweiten Detektor-Symmetrieachse ausgebildet, die sich in der Detektionsebene senkrecht zur Messrichtung erstreckt und in Messrichtung versetzt gegenüber der ersten Detektor-Symmetrieachse angeordnet ist. Auch das das dritte und vierte Detektor-Array sind im Unterschied zum vorher erläuterten Ausführungsbeispiel in Messrichtung zueinander benachbart angeordnet, also ebenfalls nicht in y-Richtung versetzt. Das erste und zweite Detektor-Array wäre in dieser Variante in der Erstreckungsrichtung der Detektor-Symmetrieachsen versetzt gegenüber dem dritten und vierten Detektor-Array angeordnet.

## Patentansprüche

1. Optische Positionsmesseinrichtung zur Erfassung der Position von zwei relativ zueinander in mindestens einer Messrichtung (x) beweglichen Objekten mit
- einer Maßverkörperung (10), die mit einem der beiden Objekte verbunden ist und die eine sich in Messrichtung (x) erstreckende Inkrementalteilung (12) sowie mindestens eine Referenzmarkierung (11) an einer Referenzposition (X_{REF}) aufweist, wobei die Referenzmarkierung (11) zwei zu einer Referenzmarkierungs-Symmetrieachse (RS) spiegelsymmetrisch angeordnete Referenzmarkierungs-Teilfelder (11_{A}, 11_{B}) umfasst, die jeweils aus einer sich in Messrichtung (x) erstreckenden Gitterstruktur mit einer örtlich veränderlichen Teilungsperiode bestehen,
- einer Abtasteinheit (20), die mit dem anderen der beiden Objekte verbunden ist und die eine divergent abstrahlende Lichtquelle (21), ein oder mehrere Gitter (23) sowie eine Referenzsignal-Detektoranordnung (22; 22'; 122) umfasst, wobei
- die Referenzsignal-Detektoranordnung (22; 22'; 122) mindestens vier Detektor-Arrays (22.1 - 22.4; 22.1' - 22.4'; 122.1 - 122.4) mit jeweils mehreren Detektorelementen (22a - 22d; 22a' - 22d'; 122a - 122d) aufweist und die Detektor-Arrays (22.1 - 22.4; 22.1' - 22.4'; 122.1 - 122.4) derart ausgebildet und angeordnet sind, dass
- aus der Abtastung der Referenzmarkierung (11) über die Referenzsignal-Detektoranordnung (22; 22'; 122) ein erstes und zweites Paar von Teil-Referenzsignalen (S1_T, S1_GT, S2_T, S2_GT) mit jeweils gegenphasigem Signalverlauf resultiert und das erste Paar von Teil-Referenzsignalen (S1_T, S1_GT) entlang der Messrichtung (x) gegenüber dem zweiten Paar von Teil-Referenzsignalen (S2_T, S2_GT) um einen Versatzbetrag versetzt ist.

2. Optische Positionsmesseinrichtung nach Anspruch 1, wobei
- die Detektorelemente (22a, 22b; 22a', 22b'; 122a, 122b) des ersten und zweiten Detektor-Arrays (22.1, 22.4; 22.1', 22.4'; 122.1, 122.4) derart angeordnet sind, dass ausgehend von einer ersten Detektor-Symmetrieachse (DS1) sich in Messrichtung (x) die Mittenabstände zwischen benachbarten Detektorelementen (22a, 22b; 22a', 22b'; 122a, 122b) in der gleichen Richtung verändern wie ausgehend von der Referenzmarkierungs-Symmetrieachse (RS) die Teilungsperioden der Gitterstrukturen in den Referenzmarkierungs-Teilfeldern (11_{A}, 11_{B}) und
- die Detektorelemente (22c, 22d; 22c', 22d'; 122c, 122d) des dritten und vierten Detektor-Arrays (22.2, 22.3; 22.2', 22.3'; 122.2, 122.3) derart angeordnet sind, dass ausgehend von einer zweiten Detektor-Symmetrieachse (DS2) sich in Messrichtung (x) die Mittenabstände zwischen benachbarten Detektorelementen (22c, 22d; 22c', 22d'; 122c, 122d) in der gleichen Richtung verändern wie ausgehend von der Referenzmarkierungs-Symmetrieachse (RS) die Teilungsperioden der Gitterstrukturen in den Referenzmarkierungs-Teilfeldern (11_{A}, 11_{B}).

3. Optische Positionsmesseinrichtung nach Anspruch 2, wobei die zweite Detektor-Symmetrieachse (DS2) gegenüber der ersten Detektor-Symmetrieachse (DS1) um einen Betrag (ΔDS) versetzt angeordnet ist, welcher dem doppelten Versatzbetrag zwischen dem ersten und zweiten Paar von Teil-Referenzsignalen (S1_T, S1_GT, S2_T, S2_GT) entspricht.

4. Optische Positionsmesseinrichtung nach Anspruch 1, mit Mitteln zur Erzeugung eines Abgleichsignals (S_{A}), welches aus der optischen Abtastung der Referenzmarkierung (11) auf der Maßverkörperung (10) resultiert, wobei das Abgleichsignal (S_{A}) zur Einstellung von ein oder mehr Triggersignalen (TS1, TS2, TS3) bei der Weiterverarbeitung der Teil-Referenzsignale (S1_T, S1_GT, S2_T, S2_GT) zu einem Referenzsignal (RI) dient.

5. Optische Positionsmesseinrichtung nach Anspruch 4, wobei als Mittel zur Erzeugung des Abgleichsignals (S_{A}) Gleichlicht-Detektorelemente (22e; 22e') zwischen den Detektorelementen (22a - 22d; 22a' - 22d') der Detektor-Arrays (22.1 - 22.4; 22.1' - 22.4') angeordnet sind.

6. Optische Positionsmesseinrichtung nach Anspruch 4, wobei als Mittel zur Erzeugung des Abgleichsignals (S_{A}) ein Summationselement (136) zur Aufsummierung aller Teil-Referenzsignale (S1_T, S1_GT, S2_T, S2_GT) der Detektor-Arrays dient (122.1 - 122.4).

7. Optische Positionsmesseinrichtung nach Anspruch 4, wobei
- das erste und zweite Paar von Teil-Referenzsignalen (S1_T, S1_GT, S2_T, S2_GT) an den Eingängen zweier Differenzverstärker (30.1, 30.2) anliegt und am Ausgang der beiden Differenzverstärker (30.1, 30.2) je ein pulsförmiges Signal (S1, S2) zur Weiterverarbeitung bereitsteht,
- den beiden Differenzverstärkern (30.1, 30.2) ein Summenbildungselement (31) und ein Differenzbildungselement (32) nachgeordnet ist, über die ein Summen- und ein Differenzsignal (S1+S2, S1-S2) aus den pulsförmigen Signalen (S1, S2) resultiert,
- die Summen- und Differenzsignale (S1+S2, S1-S2) an den ersten Eingängen mehrerer Komparatoren (33.1 - 33.3) anliegen, an deren jeweils zweitem Eingang ein aus dem Abgleichsignal (S_{A}) abgeleitetes Triggersignal (TS1, TS2, TS3) anliegt und
- den mehreren Komparatoren (33.1 - 33.3) ein logisches Verknüpfungselement (35) nachgeordnet ist, an dessen Ausgang des Referenzsignal (RI) resultiert.

8. Optische Positionsmesseinrichtung nach Anspruch 5 und 7, wobei das Abgleichsignal (S_{A}) über einen Eingangsverstärker (34) verstärkt und dann das verstärkte Abgleichsignal (S_{A}) drei Verstärkern (34.1, 34.2, 34.3) mit einstellbaren, unterschiedlichen Verstärkungsfaktoren (a, b, c) zuführbar ist und die drei aus dem Abgleichsignal (S_{A}) abgeleiteten, unterschiedlich verstärkten Signale als Triggersignale (TS1, TS2, TS3) den zweiten Eingängen der drei Komparatoren (33.1 - 33.3) zuführbar sind.

9. Optische Positionsmesseinrichtung nach Anspruch 6 und 7, wobei das aus der Aufsummation resultierende Abgleichsignal (S_{A}) drei Verstärkern (134.1, 134.2, 134.3) mit einstellbaren, unterschiedlichen Verstärkungsfaktoren (a, b, c) zuführbar ist und die drei aus dem Abgleichsignal (S_{A}) abgeleiteten, unterschiedlich verstärkten Signale als Triggersignale (TS1, TS2, TS3) den zweiten Eingängen der drei Komparatoren (133.1, 133.2, 133.3) zuführbar sind

10. Optische Positionsmesseinrichtung nach mindestens einem der vorhergehenden Ansprüche, wobei zwischen der Lichtquelle (21) und der Maßverkörperung (10) eine Blende mit einem Sendespalt (23) angeordnet ist.

11. Optische Positionsmesseinrichtung nach mindestens einem der vorhergehenden Ansprüche, wobei auf einem Teil der Detektorelemente (122a - 122d) Abdeckgitter (25) angeordnet sind, deren Gitterstriche orthogonal zur Längserstreckungsrichtung der Detektorelemente (122a - 122d) orientiert sind.

12. Optische Positionsmesseinrichtung nach mindestens einem der vorhergehenden Ansprüche, wobei in Messrichtung (x) beidseitig benachbart zur Referenzmarkierung (11) in einer Referenzspur auf der Maßverkörperung (10) Gitterstrukturen (14) angeordnet sind, welche auf die darauf einfallenden Strahlenbündel eine optisch zerstreuende Wirkung ausüben.

13. Optische Positionsmesseinrichtung nach Anspruch 12, wobei die Gitterstrukturen (14) in der Referenzspur eine Teilungsperiode (TP_{G}) besitzen, die der halben Teilungsperiode (TP_{INC}) der auf der Maßverkörperung (10) in einer Inkrementalspur angeordneten Inkrementalteilung (12) entspricht.

14. Optische Positionsmesseinrichtung nach Anspruch 12, wobei die Gitterstrukturen (14) in der Referenzspur ein Strich-Teilungsperioden-Verhältnis von 0.25 aufweisen.

15. Optische Positionsmesseinrichtung nach Anspruch 1, wobei die Detektoranordnung vier Detektor-Arrays umfasst, und
- ein erstes und ein zweites Detektor-Array (22.1, 22.4; 22.1', 22.4'; 122.1, 122.4) spiegelsymmetrisch zu einer ersten Detektor-Symmetrieachse (DS1) ausgebildet sind, die sich in der Detektionsebene senkrecht zur Messrichtung (x) erstreckt, wobei das erste und das zweite Detektor-Array (22.1, 22.4; 22.1', 22.4'; 122.1, 122.4) in der Detektionsebene senkrecht zur Messrichtung (x) versetzt zueinander angeordnet sind und
- ein drittes und ein viertes Detektor-Array (22.3, 22.2; 22.3', 22.2'; 122.3, 122.2) spiegelsymmetrisch zu einer zweiten Detektor-Symmetrieachse (DS2) ausgebildet sind, die sich in der Detektionsebene senkrecht zur Messrichtung (x) erstreckt und in Messrichtung (x) versetzt gegenüber der ersten Detektor-Symmetrieachse (DS1) angeordnet ist, wobei das dritte und vierte Detektor-Array (22.3, 22.2; 22.3', 22.2'; 122.3, 122.2) in der Detektionsebene senkrecht zur Messrichtung (x) versetzt zueinander angeordnet sind.

## Claims

1. Optical position measuring device for capturing the position of two objects which are movable relative to one another in at least one measurement direction (x), comprising
- a material measure (10), which is connected to one of the two objects and has an incremental graduation (12) that extends in the measurement direction (x), and at least one reference mark (11) at a reference position (X_{REF}), wherein the reference mark (11) comprises two reference mark subfields (11_{A}, 11_{B}), which are arranged mirror-symmetrically with respect to a reference mark symmetry axis (RS) and consist in each case of a grating structure having a spatially variable graduation period that extends in the measurement direction (x),
- a scanning unit (20), which is connected to the other of the two objects and comprises a divergently emitting light source (21), one or more gratings (23) and a reference signal detector arrangement (22; 22'; 122), wherein
- the reference signals detector arrangement (22; 22'; 122) has at least four detector arrays (22.1-22.4; 22.1'-22.4'; 122.1-122.4) having in each case a plurality of detector elements (22a-22d; 22a'-22d'; 122a-122d), and the detector arrays (22.1-22.4; 22.1'-22.4'; 122.1-122.4) are configured and arranged such that
- a first and second pair of partial reference signals (S1_T, S1_GT, S2_T, S2_GT) with in each case an opposite-phase signal profile results from the scanning of the reference mark (11) via the reference signal detector arrangement (22; 22'; 122) and the first pair of partial reference signals (S1_T, S1_GT) is offset along the measurement direction (x) with respect to the second pair of partial reference signals (S2_T, S2_GT) by an offset amount.

2. Optical position measuring device according to Claim 1, wherein
- the detector elements (22a, 22b; 22a', 22b'; 122a, 122b) of the first and second detector arrays (22.1, 22.4; 22.1', 22.4'; 122.1, 122.4) are arranged such that the centre-to-centre distances between neighbouring detector elements (22a, 22b; 22a', 22b'; 122a, 122b) change in the measurement direction (x) starting from a first detector symmetry axis (DS1) in the same direction as the graduation periods of the grating structures in the reference mark subfield (11_{A}, 11_{B}) starting from the reference mark symmetry axis (RS), and
- the detector elements (22c, 22d; 22c', 22d'; 122c, 122d) of the third and fourth detector arrays (22.2, 22.3; 22.2', 22.3'; 122.2, 122.3) are arranged such that the centre-to-centre distances between neighbouring detector elements (22c, 22d; 22c', 22d'; 122c, 122d) change in the measurement direction (x) starting from a second detector symmetry axis (DS2) in the same direction as the graduation periods of the grating structures in the reference mark subfields (11_{A}, 11_{B}) starting from the reference mark symmetry axis (RS).

3. Optical position measuring device according to Claim 2, wherein the second detector symmetry axis (DS2) is arranged such that it is offset with respect to the first detector symmetry axis (DS1) by an amount (ΔDS) which corresponds to twice the offset amount between the first and second pairs of partial reference signals (S1_T, S1_GT, S2_T, S2_GT).

4. Optical position measuring device according to Claim 1, comprising means for generating an adjustment signal (S_{A}), which results from the optical scanning of the reference mark (11) on the material measure (10), wherein the adjustment signal (S_{A}) serves for setting one or more trigger signals (TS1, TS2, TS3) during the further processing of the partial reference signals (S1_T, S1_GT, S2_T, S2_GT) to a reference signal (RI).

5. Optical position measuring device according to Claim 4, wherein constant-light detector elements (22e; 22e') are arranged between the detector elements (22a-22d; 22a'-22d') of the detector arrays (22.1-22.4; 22.1'-22.4') as means for generating the adjustment signal (S_{A}).

6. Optical position measuring device according to Claim 4, wherein a summation element (136) for summing up all partial reference signals (S1_T, S1_GT, S2_T, S2_GT) of the detector arrays (122.1-122.4) serves as means for generating the adjustment signal (S_{A}).

7. Optical position measuring device according to Claim 4, wherein
- the first and second pairs of partial reference signals (S1_T, S1_GT, S2_T, S2_GT) are present at the inputs of two differential amplifiers (30.1, 30.2) and in each case one pulse-type signal (S1, S2) for further processing is present at the output of the two differential amplifiers (30.1, 30.2),
- a sum forming element (31) and a difference forming element (32) are arranged downstream of the two differential amplifiers (30.1, 30.2), via which elements a sum and a difference signal (S1+S2, S1-S2) results from the pulse-type signals (S1, S2),
- the sum and difference signals (S1+S2, S1-S2) are present at the first inputs of a plurality of comparators (33.1-33.3), at the second input of which in each case a trigger signal (TS1, TS2, TS3) is present that is derived from the adjustment signal (S_{A}), and
- a logic operator element (35) is arranged downstream of the multiple comparators (33.1-33.3), at the output of which the reference signal (RI) results.

8. Optical position measuring device according to Claims 5 and 7, wherein the adjustment signal (S_{A}) is amplified via an input amplifier (34), and then the amplified adjustment signal (S_{A}) is feedable to three amplifiers (34.1, 34.2, 34.3) having settable, different amplification factors (a, b, c) and the three differently amplified signals that are derived from the adjustment signal (S_{A}) are feedable as trigger signals (TS1, TS2, TS3) to the two inputs of the three comparators (33.1-33.3).

9. Optical position measuring device according to Claims 6 and 7, wherein the adjustment signal (S_{A}) resulting from the summing up is feedable to three amplifiers (134.1, 134.2, 134.3,) having settable, different amplification factors (a, b, c) and the three differently amplified signals that are derived from the adjustment signal (S_{A}) are feedable as trigger signals (TS1, TS2, TS3) to the two inputs of the three comparators (133.1, 133.2, 133.3).

10. Optical position measuring device according to at least one of the preceding claims, wherein a stop with a transmission gap (23) is arranged between the light source (21) and the material measure (10).

11. Optical position measuring device according to at least one of the preceding claims, wherein cover gratings (25) are arranged on some of the detector elements (122a-122d), the grating lines of which are orientated orthogonally to the longitudinal extent direction of the detector elements (122a-122d).

12. Optical position measuring device according to at least one of the preceding claims, wherein grating structures (14), which have an optically scattering effect on the beams that are incident upon them, are arranged in the measurement direction (x) on both sides adjacent to the reference mark (11) in a reference track on the material measure (10).

13. Optical position measuring device according to Claim 12, wherein the grating structures (14) have, in the reference track, a graduation period (TP_{G}), which corresponds to half the graduation period (TP_{INC}) of the incremental graduation (12) arranged on the material measure (10) in an incremental track.

14. Optical position measuring device according to Claim 12, wherein the grating structures (14) have, in the reference track, a line-graduation period ratio of 0.25.

15. Optical position measuring device according to Claim 1, wherein the detector arrangement comprises four detector arrays, and
- a first and a second detector array (22.1, 22.4; 22.1', 22.4'; 122.1, 122.4) are configured with mirror-symmetry with respect to a first detector symmetry axis (DS1) that extends in the detection plane perpendicular to the measurement direction (x), wherein the first and the second detector array (22.1, 22.4; 22.1', 22.4'; 122.1, 122.4) are arranged such that they are offset with respect to one another in the detection plane perpendicular to the measurement direction (x), and
- a third and a fourth detector array (22.3, 22.2; 22.3', 22.2'; 122.3, 122.2) are configured with mirror-symmetry with respect to a second detector symmetry axis (DS2) that extends in the detection plane perpendicular to the measurement direction (x) and is arranged in the measurement direction (x) with an offset with respect to the first detector symmetry axis (DS1), wherein the third and fourth detector arrays (22.3, 22.2; 22.3', 22.2'; 122.3, 122.2) are arranged such that they are offset with respect to one another in the detection plane perpendicular to the measurement direction (x).

## Revendications

1. Dispositif de mesure de position optique destiné à détecter la position de deux objets mutuellement mobiles dans au moins une direction de mesure (x), comprenant
- un étalon (10) qui est relié à l'un des deux objets et qui possède une graduation incrémentale (12) qui s'étend dans la direction de mesure (x) ainsi qu'au moins un marquage de référence (11) à une position de référence (X_{REF}) le marquage de référence (11) comprenant deux champs partiels de marquage de référence (11_{A}, 11_{B}) disposés selon une symétrie en miroir par rapport à un axe de symétrie de marquage de référence (RS), lesquels se composent respectivement d'une structure en grille qui s'étend dans la direction de mesure (x) avec une période de graduation localement variable,
- une unité de palpage (20) qui est reliée à l'autre des deux objets et qui comprend une source de lumière (21) à rayonnement divergent, une ou plusieurs grilles (23) ainsi qu'un arrangement détecteur de signal de référence (22 ; 22' ; 122),
- l'arrangement détecteur de signal de référence (22 ; 22' ; 122) possédant au moins quatre réseaux de détecteurs (22.1 - 22.4 ; 22.1' - 22.4' ; 122.1 - 122.4) comprenant respectivement plusieurs éléments détecteurs (22a - 22d ; 22a' - 22d' ; 122a - 122d) et les réseaux de détecteurs (22.1 - 22.4 ; 22.1' - 22.4' ; 122.1 - 122.4) étant configurés et disposés de telle sorte que
- une première et une deuxième paire de signaux de référence partiels (S1_T, S1_GT, S2_T, S2_GT) ayant respectivement un tracé de signal en opposition de phase résultent du palpage du marquage de référence (11) par l'arrangement détecteur de signal de référence (22 ; 22' ; 122) et la première paire de signaux de référence partiels (S1_T, S1_GT) est décalée le long de la direction de mesure (x) par rapport à la deuxième paire de signaux de référence partiels (S2_T, S2_GT).

2. Dispositif de mesure de position optique selon la revendication 1, avec lequel
- les éléments détecteurs (22a, 22b ; 22a', 22b' ; 122a, 122b) des premiers et deuxièmes réseaux de détecteurs (22.1, 22.4 ; 22.1', 22.4' ; 122.1, 122.4) sont disposés de telle sorte qu'à partir d'un premier axe de symétrie de détection (DS1), les écarts entre centres des éléments détecteurs (22a, 22b ; 22a', 22b' ; 122a, 122b) voisins varient dans la direction de mesure (x) dans la même direction que les périodes de graduation des structures en grille dans les champs partiels de marquage de référence (11_{A}, 11_{B}) à partir de l'axe de symétrie de marquage de référence (RS), et
- les éléments détecteurs (22c, 22d ; 22c', 22d' ; 122c, 122d) des troisièmes et quatrièmes réseaux de détecteurs (22.2, 22.3 ; 22.2', 22.3' ; 122.2, 122.3) sont disposés de telle sorte qu'à partir d'un deuxième axe de symétrie de détection (DS2), les écarts entre centres des éléments détecteurs (22c, 22d ; 22.c', 22.d' ; 122.c, 122.d) voisins varient dans la direction de mesure (x) dans la même direction que les périodes de graduation des structures en grille dans les champs partiels de marquage de référence (11_{A}, 11_{B}) à partir de l'axe de symétrie de marquage de référence (RS).

3. Dispositif de mesure de position optique selon la revendication 2, avec lequel le deuxième axe de symétrie de détection (DS2) est disposé décalé d'une valeur (ΔDS) par rapport au premier axe de symétrie de détection (DS1), laquelle correspond au double de la valeur du décalage entre la première et la deuxième paire de signaux de référence partiels (S1_T, S1_GT, S2_T, S2_GT).

4. Dispositif de mesure de position optique selon la revendication 1, comprenant des moyens pour générer un signal de compensation (S_{A}) qui résulte du palpage optique du marquage de référence (11) sur l'étalon (10), le signal de compensation (S_{A}) servant au réglage d'un ou plusieurs signaux de déclenchement (TS1, TS2, TS3) lors du traitement postérieur des signaux de référence partiels (S1_T, S1_GT, S2_T, S2_GT) en un signal de référence (RI).

5. Dispositif de mesure de position optique selon la revendication 4, avec lequel les moyens pour générer un signal de compensation (S_{A}) sont des éléments de détection de lumière constante (22e ; 22e') disposés entre les éléments détecteurs (22a - 22d ; 22a' - 22d') des réseaux de détecteurs (22.1 - 22.4 ; 22.1' - 22.4').

6. Dispositif de mesure de position optique selon la revendication 4, avec lequel un élément totalisateur (136) destiné à additionner tous les signaux de référence partiels (S1_T, S1_GT, S2_T, S2_GT) des réseaux de détecteurs (122.1 - 122.4) sert de moyens pour générer un signal de compensation (S_{A}).

7. Dispositif de mesure de position optique selon la revendication 4, avec lequel
- la première et la deuxième paire de signaux de référence partiels (S1_T, S1_GT, S2_T, S2_GT) sont appliqués aux entrées de deux amplificateurs différentiels (30.1, 30.2) et un signal impulsionnel (S1, S2) est disponible à la sortie des deux amplificateurs différentiels (30.1, 30.2) pour un traitement postérieur,
- un élément additionneur (31) et un élément soustracteur (32) sont disposés en aval des deux amplificateurs différentiels (30.1, 30.2), par le biais desquels sont obtenus un signal total et un signal différentiel (S1+S2, S1-S2) des signaux impulsionnels (S1, S2)
- les signaux total et différentiel (S1+S2, S1-S2) sont appliqués aux premières entrées de plusieurs comparateurs (33.1 - 33.3) à la deuxième entrée respective desquels est appliqué un signal de déclenchement (TS1, TS2, TS3) dérivé du signal de compensation (S_{A}), et
- un élément de combinaison logique (35) à la sortie duquel est obtenu le signal de référence (RI) est disposé en aval des plusieurs comparateurs (33.1 - 33.3).

8. Dispositif de mesure de position optique selon les revendications 5 et 7, avec lequel le signal de compensation (S_{A}) est amplifié par un amplificateur d'entrée (34) et le signal de compensation (S_{A}) amplifié peut ensuite être acheminé à trois amplificateurs (34.1, 34.2, 34.3) ayant des facteurs d'amplification (a, b, c) réglables différents, et les trois signaux amplifiés différents dérivés du signal de compensation (S_{A}) peuvent être acheminés en tant que signaux de déclenchement (TS1, TS2, TS3) aux deuxièmes entrées des trois comparateurs (33.1 - 33.3).

9. Dispositif de mesure de position optique selon les revendications 6 et 7, avec lequel le signal de compensation (S_{A}) résultant de l'addition peut être acheminé à trois amplificateurs (134.1, 134.2, 134.3) ayant des facteurs d'amplification (a, b, c) réglables différents, et les trois signaux amplifiés différents dérivés du signal de compensation (S_{A}) peuvent être acheminés en tant que signaux de déclenchement (TS1, TS2, TS3) aux deuxièmes entrées des trois comparateurs (133.1, 133.2, 133.3).

10. Dispositif de mesure de position optique selon au moins l'une des revendications précédentes, avec lequel un obturateur muni d'une fente d'émission (23) est disposé entre la source de lumière (21) et l'étalon (10).

11. Dispositif de mesure de position optique selon au moins l'une des revendications précédentes, avec lequel des grilles de recouvrement (25) sont disposées sur une partie des éléments détecteurs (122a - 122d), dont les traits de grille sont orientés horizontalement par rapport au sens de projection longitudinal des éléments détecteurs (122a - 122d).

12. Dispositif de mesure de position optique selon au moins l'une des revendications précédentes, avec lequel des structures en grille (14) sont disposées sur l'étalon (10) dans une trace de référence voisine des deux côtés du marquage de référence (11) dans la direction de mesure (x), lesquelles exercent un effet optiquement divergent sur les faisceaux de rayons qui y sont incidents.

13. Dispositif de mesure de position optique selon la revendication 12, avec lequel les structures en grille (14) possèdent dans la trace de référence une période de graduation (TP_{G}) qui correspond à la moitié de la période de graduation (TP_{INC}) de la graduation incrémentale (12) disposée sur l'étalon (10) dans une trace incrémentale.

14. Dispositif de mesure de position optique selon la revendication 12, avec lequel les structures en grille (14) possèdent dans la trace de référence un rapport de périodes de graduation - trait de 0,25.

15. Dispositif de mesure de position optique selon la revendication 1, avec lequel
- un premier et un deuxième réseau de détecteurs (22.1, 22.4 ; 22.1', 22.4' ; 122.1, 122.4) sont configurés selon une symétrie en miroir par rapport à un premier axe de symétrie de détecteur (DS1), lequel s'étend dans le plan de détection perpendiculairement à la direction de mesure (x), le premier et le deuxième réseau de détecteurs (22.1, 22.4 ; 22.1', 22.4' ; 122.1, 122.4) étant disposés décalés l'un par rapport à l'autre dans le plan de détection perpendiculairement à la direction de mesure (x), et
- un troisième et un quatrième réseau de détecteurs (22.3, 22.2 ; 22.3', 22.2' ; 122.3, 122.2) sont configurés selon une symétrie en miroir par rapport à un deuxième axe de symétrie de détecteur (DS2), lequel s'étend dans le plan de détection perpendiculairement à la direction de mesure (x), le troisième et le quatrième réseau de détecteurs (22.3, 22.2 ; 22.3', 22.2' ; 122.3, 122.2) étant disposés décalés l'un par rapport à l'autre dans le plan de détection perpendiculairement à la direction de mesure (x).
